# EUROPÄISCHE PATENTSCHRIFT

(11) **EP 3 585 668 B1**
(45) Veröffentlichungstag und Bekanntmachung des Hinweises auf die Patenterteilung: **07.04.2021**
(21) Anmeldenummer: 18706491.0
(22) Anmeldetag: 20.02.2018
(51) Int. Cl.: B60W 50/12, B60W 60/00, B60K 28/02, B60W 40/08, G06F 21/32

(54) **VERFAHREN ZUM BETREIBEN EINES KRAFTFAHRZEUGS IN EINEM AKTIVIERTEN ZUMINDEST TEILAUTONOMEN FAHRMODUS**
METHOD FOR OPERATING A MOTOR VEHICLE IN AN ACTIVATED, AT LEAST PARTIALLY AUTONOMOUS DRIVING MODE
PROCÉDÉ DE FONCTIONNEMENT D'UN VÉHICULE AUTOMOBILE DANS UN MODE DE ROULEMENT ACTIVÉ AU MOINS PARTIELLEMENT AUTONOME

(30) Priorität: 22.02.2017 DE 102017202834
(43) Veröffentlichungstag der Anmeldung: 01.01.2020
(73) Patentinhaber: Audi AG, 85045 Ingolstadt (DE)
(72) Erfinder: WUNDERLICH, Matthias, 85053 Ingolstadt (DE)
(86) Internationale Anmeldenummer: PCT/EP2018/054069
(87) Internationale Veröffentlichungsnummer: WO 2018/153826

(56) Entgegenhaltungen:
- DE-A1-102014 013 298
- DE-A1-102014 205 830
- DE-A1-102014 223 258
- DE-A1-102014 223 269
- DE-A1-102015 010 203
- US-A1- 2017 038 773

## Beschreibung

Die vorliegende Erfindung betrifft ein Verfahren zum Betreiben eines Kraftfahrzeugs in einem aktivierten zumindest teilautonomen Fahrmodus.

Zumindest teilautonom betreibbare Kraftfahrzeuge (also teilautonom oder vollautonom betreibbare Kraftfahrzeuge) sind aus dem Stand der Technik bereits bekannt. Hierbei übernimmt eine Steuereinheit des Kraftfahrzeugs die Führung oder die zumindest teilweise Führung dessen und steuert das Kraftfahrzeug entlang einer Wegstrecke zum Erreichen eines vorbestimmten Zielortes. Dabei übernimmt die Steuereinheit die Steuerung einer Querlenkung und/oder Längslenkung des Kraftfahrzeugs, wie beispielsweise eine Steuerung über eine Geschwindigkeit, ein Lenken und/oder ein Bremsen des Kraftfahrzeugs. Hierbei befasst sich der Stand der Technik mit der Problematik, wann ein Wechsel von einem teilautonomen Fahrmodus in einen manuellen Fahrmodus gewährt werden soll.

In diesem Zusammenhang beschreibt die DE 10 2012 223 758 A1 ein Verfahren zum Wechseln einer Fahrsteuerung bei einem autonomen Fahrzeug, bei welchem die Fahrsteuerung zwischen einem Fahrer und dem autonomen Fahrzeug umgeschaltet werden kann. Das Verfahren verhindert die Übernahme der Fahrsteuerung durch ein Kind oder eine fahrunkundige Person.

Aus der WO 2016 / 117 790 A1 ist eine Vorrichtung zum Wechseln eines Fahrmodus eines Fahrzeugs bekannt. Die Vorrichtung detektiert einen Zustand eines Fahrers, insbesondere ob der Fahrer dazu fähig ist, das Fahrzeug manuell zu steuern. Nur wenn dies der Fall ist, wird ein Wechseln des Fahrmodus in einen manuellen Fahrmodus gewährt.

Die US 2006 / 0 190 419 A1 beschreibt ein Kamerasystem, welches Gesichtsmerkmale, eine physische Kondition und einen Grad einer Intoxikation bei einer Person erkennt. Ein Dienst oder ein Zugang wird verweigert, wenn eine Person unterhalb des legalen Trinkalters erkannt wurde. Ist diese Person Insasse eines Kraftfahrzeugs und wird festgestellt, dass diese Person eine Gefahr darstellt, wird ein Sicherheitspersonal oder eine Polizeidienststelle kontaktiert.

Die DE 10 2014 223 269 A1 betrifft ein Verfahren, bei dem zunächst mindestens ein Fahrzeuginsasse identifiziert wird, anschließend ein mit dem mindestens einen Fahrzeuginsassen assoziiertes Profil ausgebildet wird und schließlich mindestens ein Fahrzeugsubsystem gemäß dem ausgewählten Profil autonom betrieben wird. Dabei kann das assoziierte Profil mehrere Fahrbeschränkungen definieren, beispielsweise geographische Beschränkungen, Straßentypbeschränkungen, Zeitbeschränkungen, Geschwindigkeitsbeschränkungen, Sicherheitsbeschränkungen oder Umgebungsbeschränkungen. Es besteht die Möglichkeit eine Aufhebungsanforderung zum vorübergehenden Deaktivieren von Beschränkungen zum Besitzer des Fahrzeugs zu senden. Eine Verarbeitungsvorrichtung ist deshalb dafür ausgelegt, über eine Benutzerschnittstellenvorrichtung eine Benutzereingabe mit einer Anforderung der vorübergehenden Deaktivierung einer bestimmten Beschränkung zu empfangen. Diese Druckschrift wurde zur Formulierung des Oberbegriffs von Patentanspruch 1 herangezogen.

Aus der DE 10 2014 205 830 A1 ist ein Verfahren und eine entsprechende Vorrichtung zur Erhöhung der Sicherheit eines Fahrzeugs bekannt, das einen voll- und/oder teilautonomen Fahrmodus aufweist. Es wird eine Steuereinheit für ein Fahrzeug mit einem autonomen Fahrmodus beschrieben. Die Steuereinheit ist eingerichtet zu ermitteln, ob ein Fahrer des Fahrzeugs eine Berechtigung dazu hat, das Fahrzeug selbstständig zu steuern. Die Steuereinheit ist weiterhin eingerichtet, ein Verlassen des autonomen Fahrmodus des Fahrzeugs zu unterbinden und/oder wenn das Fahrzeug sich nicht im autonomen Fahrmodus befindet, ein selbstständiges Steuern des Fahrzeugs durch den Fahrer zu unterbinden, wenn ermittelt wird, dass der Fahrer keine Berechtigung dazu hat, das Fahrzeug selbstständig zu steuern.

Nachteilig bei den beschriebenen, zumindest teilautonom betreibbaren Kraftfahrzeugen ist, dass eine Fahrtüchtigkeit eines Kraftfahrzeuginsassen lediglich für einen manuellen Fahrmodus des Kraftfahrzeugs geprüft wird. So kann es jedoch sein, dass auch, wenn das Kraftfahrzeug in einem zumindest teilautonomen Fahrzeugmodus betrieben wird, die Aufmerksamkeit eines Kraftfahrzeuginsassen erfordert wird. Dies ist insbesondere der Fall, wenn eine Gefahrensituation oder eine Verkehrssituation, für welche der teilautonome Fahrzeugmodus nicht oder nur zum Teil ausgebildet ist, auftritt. Des Weiteren kann es sein, dass zum Betreiben des zumindest teilautonomen Fahrzeugmodus eine manuelle Benutzereingabe benötigt wird, wie beispielsweise eine Eingabe zu einer gewünschten Wegstrecke oder zu einem gewünschten Zielort. Auch hier können je nach Fahrtüchtigkeit des Kraftfahrzeuginsassen Gefahrensituationen entstehen.

Aufgabe der vorliegenden Erfindung ist es, ein Verfahren zum Betreiben eines Kraftfahrzeugs in einem aktivierten zumindest teilautonomen Fahrmodus bereitzustellen, bei welchem das Fahrzeug möglichst sicher betrieben wird und potentielle Gefahrensituationen für einen Kraftfahrzeuginsassen reduziert werden.

Diese Aufgabe wird durch den Gegenstand von Patentanspruch 1 gelöst. Vorteilhafte Weiterbildungen der Erfindung sind durch die Unteransprüche, die folgende Beschreibung und die Figuren offenbart.

Die vorliegende Erfindung basiert auf der Erkenntnis, dass bei einem Betreiben eines Kraftfahrzeugs in einem aktivierten zumindest teilautonomen Fahrmodus geprüft werden sollte, ob wenigstens ein Kraftfahrzeuginsasse des Kraftfahrzeugs berechtigt ist, mit dem Kraftfahrzeug in dem zumindest teilautonomen Fahrmodus zu fahren. So kann einerseits verhindert werden, dass eine nicht-berechtigte Person, wie beispielsweise ein Kind, sich alleine in dem Kraftfahrzeug befindet, während dieses in dem zumindest teilautonomen Fahrmodus fährt. Dabei kann davon ausgegangen werden, dass die nicht-berechtigte Person unfähig oder nur bedingt fähig ist, sachgerecht bei einer auftretenden Gefahrensituation im Straßenverkehr zu reagieren. Beispielsweise kann es bei einer solchen Gefahrensituation dazu kommen, dass ein Kraftfahrzeuginsasse selbst die Steuerung des Kraftfahrzeugs übernehmen sollte, um die Gefahr abzuwenden oder einzudämmen, was jedoch von beispielsweise einem Kind nicht ausgeführt werden kann.

Andererseits kann der nicht-berechtigten Person dennoch von einer berechtigten Person erlaubt werden, alleine mit dem Kraftfahrzeug in dem zumindest teilautonomen Fahrmodus zu fahren. Um weiterhin die Sicherheit des Kraftfahrzeuginsassen und allgemein eines Kraftfahrzeugumfelds zu gewährleisten, kann der Umfang des zumindest teilautonomen Fahrmodus eingeschränkt werden und/oder ein Betrieb des zumindest teilautonomen Fahrmodus mit speziellen Bedingungen verknüpft werden.

Das erfindungsgemäße Verfahren zum Betreiben des Kraftfahrzeugs in einem aktivierten zumindest teilautonomen Fahrmodus sieht vor, dass eine im Kraftfahrzeug angeordnete Erfassungseinrichtung wenigstens einen Kraftfahrzeuginsassen in dem Kraftfahrzeug erfasst. Dabei kann bei einem Einsteigen des wenigstens einen Kraftfahrzeuginsassen dieser erfasst werden und/oder bei Erfassen eines Aktivierens des zumindest teilautonomen Fahrmodus ein Kraftfahrzeuginnenraum auf wenigstens einen möglichen Kraftfahrzeuginsassen geprüft werden. Das erfindungsgemäße Verfahren sieht weiterhin vor, dass eine mit der Erfassungseinrichtung gekoppelte Berechtigungseinrichtung nach Erfassen des wenigstens einen Kraftfahrzeuginsassen prüft, ob zumindest einer des wenigstens einen erfassten Kraftfahrzeuginsassen mindestens ein Berechtigungskriterium erfüllt. So kann so lange nach jedem erfassten Kraftfahrzeuginsassen von der Berechtigungseinrichtung auf das mindestens eine Berechtigungskriterium geprüft werden, bis einer des wenigstens einen erfassten Kraftfahrzeuginsassen das Berechtigungskriterium erfüllt. Es kann aber auch eine Gesamtheit der Kraftfahrzeuginsassen erfasst werden und erst dann durch die Berechtigungseinrichtung geprüft werden, ob wenigstens einer der Kraftfahrzeuginsassen das mindestens eine Berechtigungskriterium erfüllt.

Bei Erfüllen des mindestens einen Berechtigungskriteriums erzeugt die Berechtigungseinrichtung ein Freigabesignal und sendet dieses an eine Steuereinheit des Kraftfahrzeugs. Bei Empfang des Freigabesignals aktiviert die Steuereinheit den zumindest teilautonomen Fahrmodus. Daraufhin steuert die Steuereinheit das Kraftfahrzeug entlang einer Wegstrecke zum Erreichen eines vorbestimmten Zielortes.

Bei Nicht-Erfüllen des mindestens einen Berechtigungskriteriums sendet die Berechtigungseinrichtung ein Abfragesignal an ein fahrzeugexternes Berechtigungsgerät. Beispielsweise handelt es sich bei dem fahrzeugexternen Berechtigungsgerät um ein mobiles Endgerät, welches von einer berechtigten Person, die das mindestens eine Berechtigungskriterium erfüllt, geführt wird. Beispielsweise handelt es sich bei der berechtigten Person um einen Erziehungsberechtigten des Kindes, welches in dem Kraftfahrzeug erfasst wurde. Das Berechtigungsgerät kann eine Information zu dem wenigstens einen erfassten Kraftfahrzeuginsassen anzeigen und/oder eine Anfrage ausgeben, ob der zumindest teilautonome Fahrmodus des Kraftfahrzeugs aktiviert werden darf. In Abhängigkeit von einem Empfangen des Freigabesignals in Antwort auf das Abfragesignal leitet die Berechtigungseinrichtung das empfangene Freigabesignal an die Steuereinheit weiter. Mit anderen Worten wird der zumindest teilautonome Fahrmodus bei Nicht-Erfüllen des mindestens einen Berechtigungskriteriums nur dann aktiviert, wenn nach einem Aussenden des Abfragesignals die Berechtigungseinrichtung ein Freigabesignal von extern empfängt, nämlich aus dem fahrzeugexternen Berechtigungsgerät. Das fahrzeugexterne Berechtigungsgerät kann durch eine Benutzereingabe das Freigabesignal erfassen. Beispielsweise gibt der Erziehungsberechtigte über einen vorbestimmten Tastendruck oder ein Berühren eines vorbestimmten Anzeigefelds des Berechtigungsgeräts seine Zustimmung darüber ab, dass das wenigstens eine erfasste Kind im Kraftfahrzeug ohne ihn in dem zumindest teilautonom fahrenden Kraftfahrzeug mitfahren darf.

Für das Aussenden des Abfragesignals und/oder für das Empfangen des Freigabesignals kann die Berechtigungseinrichtung eine Kommunikationsverbindung zu wenigstens einem vorbestimmten Berechtigungsgerät aufbauen. Das wenigstens eine Berechtigungsgerät kann einem bestimmten Kraftfahrzeuginsassen zugeordnet sein. Beispielsweise wird bei Erfassen eines bestimmten Kindes im Kraftfahrzeug eine Kommunikationsverbindung zu dem Berechtigungsgerät eines bestimmten Erziehungsberechtigten aufgebaut. Das Berechtigungsgerät kann alternativ oder ergänzend dazu auch einem bestimmten Zeitpunkt wie einer bestimmten Tageszeit und/oder einem bestimmten Wochentag zugeordnet sein. So kann beispielsweise bei Erfassen des bestimmten Kindes im Kraftfahrzeug vormittags das Abfragesignal an das Berechtigungsgerät eines ersten Erziehungsberechtigten gesendet werden und nachmittags an das Berechtigungsgerät eines zweiten Erziehungsberechtigten, um beispielsweise eine Verfügbarkeit des jeweiligen Erziehungsberechtigten zu berücksichtigen.

Die Berechtigungseinrichtung kann zum Weiterleiten des Freigabesignals mit der Steuereinheit gekoppelt sein oder in der Steuereinheit integriert sein. Nach Erfassen eines Aktivierens des teilautonomen Fahrmodus kann die Steuereinheit eine Zeit erfassen. Wird nach Ablauf einer vorbestimmten Zeitdauer immer noch kein Freigabesignal empfangen, kann die Steuereinheit eine Benachrichtigung ausgeben, welche den wenigstens einen Kraftfahrzeuginsassen darüber informiert, dass er nicht zum Mitfahren berechtigt ist. Weiterhin kann die Steuereinheit daraufhin einen Betrieb des Kraftfahrzeugs beenden.

Durch die Erfindung ergibt sich der Vorteil, dass ein unberechtigtes Mitfahren in einem zumindest teilautonom fahrenden Kraftfahrzeug verhindert werden kann. Dadurch kann vermieden werden, dass eine fahruntüchtige Person sich in eine mögliche gefährliche Straßenverkehrssituation begibt. Weiterhin ist es vorteilhaft, dass, wenn die fahruntüchtige Person in Abwesenheit einer fahrtüchtigen Person in dem zumindest teilautonomen fahrenden Kraftfahrzeug mitfährt, zumindest eine berechtigte Person, wie beispielsweise der Erziehungsberechtigte, darüber in Kenntnis gesetzt ist. So kann dieser mittels beispielsweise weiterer Fernabfragen Entscheidungen in möglichen Gefahrensituationen treffen. Tritt beispielsweise eine Verkehrssituation auf, die ein Eingreifen einer Person und/oder eine menschliche Einschätzung erfordert, kann die Steuereinheit ein entsprechendes Anforderungssignal an die Berechtigungseinrichtung senden, welche das Anforderungssignal weiterhin an das wenigstens eine fahrzeugexterne Berechtigungsgerät sendet. Auf diesem kann eine Information zu der Verkehrssituation angezeigt werden und eine Entscheidung zum weiteren Steuern des Kraftfahrzeugs angefordert werden. Weiterhin kann das fahrzeugexterne Berechtigungsgerät eine Benutzereingabe erfassen, die eine derartige Entscheidung und/oder einen Steuerungsbefehl erfassen kann und zurück an die Berechtigungseinrichtung und die Steuereinheit senden kann. Die Steuereinheit führt daraufhin die Entscheidung und/oder den Steuerungsbefehl aus. Somit kann der nicht-berechtigte Kraftfahrzeuginsasse weiterhin möglichst sicher in dem Kraftfahrzeug mitfahren.

Die Erfindung umfasst auch optionale Weiterbildungen des erfindungsgemäßen Verfahrens, durch die sich zusätzliche Vorteile ergeben.

In vorteilhafter Ausgestaltung des erfindungsgemäßen Verfahrens erzeugt das fahrzeugexterne Berechtigungsgerät auf Empfang des Abfragesignals hin das Freigabesignal in Abhängigkeit von einer vorbestimmten Benutzereingabe über eine Bedienfläche des fahrzeugexternen Berechtigungsgeräts. Die Bedienfläche kann dabei eine Bedientaste und/oder eine berührungsempfindliche Anzeigefläche umfassen. Die vorbestimmte Benutzereingabe kann ein Bedienen einer vorbestimmten Bedientaste und/oder ein Berühren eines vorbestimmten Teils der Anzeigefläche und/oder ein Sprachbefehl sein.

Alternativ oder ergänzend hierzu erzeugt das fahrzeugexterne Berechtigungsgerät das Freigabesignal in Abhängigkeit von einer in einem Speicher des Berechtigungsgeräts gespeicherten Benutzereinstellung. In dem Speicher des Berechtigungsgeräts kann ein Befehl zum automatischen Senden des Freigabesignals bei Empfangen eines Abfragesignals hinterlegt sein. In dem Speicher kann zudem gespeichert sein, dass der Befehl nur bei Erfüllung bestimmter Bedingungen ausgeführt wird. Beispielsweise wird nur bei Erfassen einer vorbestimmten nicht-berechtigten Person das Freigabesignal automatisch bei Empfangen des Abfragesignals von dem fahrzeugexternen Berechtigungsgerät gesendet. So kann ein Erziehungsberechtigter in dem Speicher seines Berechtigungsgeräts speichern, dass bei Erfassen des einen Kinds im Kraftfahrzeug das Aktivieren des teilautonomen Fahrmodus automatisch gewährt werden soll und somit in diesem Fall das Freigabesignal automatisch gesendet werden soll, jedoch bei Erfassen des anderen Kinds kein Freigabesignal gesendet werden soll. Dies ist beispielsweise von Vorteil, wenn die jeweils erfassten nicht-berechtigten Kraftfahrzeuginsassen unterschiedlichen Alters und/oder unterschiedliche Stufen der Fahrtüchtigkeit aufweisen. So kann man einem nicht-berechtigten Kraftfahrzeuginsassen im Teenager-Alter eher zutrauen, in einer Gefahrensituation im Straßenverkehr sachgerecht zu handeln als einem Kind oder einem Kleinkind. Der Speicher des fahrzeugexternen Berechtigungsgeräts bietet weiterhin den Vorteil, dass ein Freigabesignal auch dann erzeugt werden kann, wenn die Person, die das fahrzeugexterne Berechtigungsgerät bedient, momentan nicht zur Verfügung steht.

Erfindungsgemäß umfasst das Freigabesignal eine Information zu dem Zielort. Bei Empfangen des Freigabesignals wählt die Steuereinheit den in dem Freigabesignal umfassten Zielort aus und aktiviert den zumindest teilautonomen Fahrmodus. Daraufhin steuert die Steuereinheit das Kraftfahrzeug entlang einer Wegstrecke zum Erreichen des ausgewählten Zielortes. Dadurch, dass das Freigabesignal den Zielort vorgibt, ergibt sich der Vorteil, dass bei einer weiteren Änderung des Zielortes ein erneutes Freigabesignal mit dem geänderten Zielort erforderlich ist. So kann der nicht-berechtigte Kraftfahrzeuginsasse nach der Freigabe zum teilautonomen Fahren des Kraftfahrzeugs zu dem freigegebenen Zielort nicht ohne Weiteres den Zielort ändern, sondern benötigt hierzu erneut eine Freigabe. Dadurch behält die berechtigte Person wie der Erziehungsberechtigte einen Überblick über die Fahrt des nicht-berechtigten Kraftfahrzeuginsassen in dem teilautonom fahrenden Kraftfahrzeug.

In einer weiteren vorteilhaften Ausgestaltung hierzu wird der Zielort dadurch vorgegeben, dass das fahrzeugexterne Berechtigungsgerät eine weitere vorbestimmte Benutzereingabe über die Bedienfläche des Berechtigungsgeräts erkennt. Der Benutzer des fahrzeugexternen Berechtigungsgeräts kann den Zielort bei Empfang des Abfragesignals über die Bedienfläche eingeben und/oder aus einer Liste vorgegebener Zielorte auswählen. Alternativ oder ergänzend hierzu ist in dem Speicher des Berechtigungsgeräts eine Benutzereinstellung gespeichert, welche in Abhängigkeit des Abfragesignals und/oder des erfassten Kraftfahrzeuginsassen den Zielort vorgibt. Alternativ oder ergänzend hierzu kann der Zielort durch die Berechtigungseinrichtung vorgegeben werden. Hierzu erkennt die Berechtigungseinrichtung eine Benutzereingabe über eine Bedienfläche der Berechtigungseinrichtung und/oder ist in einem Speicher der Berechtigungseinrichtung eine gespeicherte Benutzereinstellung gegeben, welche den Zielort umfasst. Die Berechtigungseinrichtung kann auch mit einer Navigationseinrichtung des Kraftfahrzeugs gekoppelt sein und von der Navigationseinrichtung eine Information zu dem Zielort empfangen. Der Zielort kann also im Kraftfahrzeug oder kraftfahrzeugextern bestimmt werden. Wird der Zielort durch eine Bedienung der Berechtigungseinrichtung ausgewählt, kann das Abfragesignal, welches an das fahrzeugexterne Berechtigungsgerät ausgesendet wird, eine Information zu dem ausgewählten Zielort enthalten. Die Steuereinheit kann den zumindest teilautonomen Fahrmodus zum Steuern des Kraftfahrzeugs zu dem Zielort nur dann aktivieren, wenn das Freigabesignal die Information zu dem Zielort umfasst. Der Benutzer des fahrzeugexternen Berechtigungsgeräts kann dadurch bestimmen, wohin der nicht-berechtigte Kraftfahrzeuginsasse mit dem Kraftfahrzeug fahren darf. Somit behält beispielsweise der Erziehungsberechtigte einen besseren Überblick über die Fahrt seines Kindes.

In einer vorteilhaften Ausführungsform des erfindungsgemäßen Verfahrens wird der Zielort mit wenigstens einem dem Zielort zugeordneten Kalenderzeitpunkt in den Speicher der Berechtigungseinrichtung gespeichert. Bei dem Kalenderzeitpunkt handelt es sich beispielsweise um ein bestimmtes Datum, eine bestimmte Uhrzeit, eine bestimmte Tageszeit und/oder einen bestimmten Wochentag. Bei dem Kalenderzeitpunkt kann es sich auch um einen periodisch auftretenden Kalenderzeitpunkt handeln, wie beispielsweise jeden Montag. Bei Nicht-Erfüllen des Berechtigungskriteriums sendet die Berechtigungseinrichtung in einem vorbestimmten Zeitabstand vor oder zu dem wenigstens einen gespeicherten Kalenderzeitpunkt das Abfragesignal an das fahrzeugexterne Berechtigungsgerät. Die Berechtigungseinrichtung übernimmt in dem vorbestimmten Zeitabstand vor oder zu dem wenigstens einen gespeicherten Kalenderzeitpunkt den gespeicherten, zugeordneten Zielort und legt diesen als einen aktuellen Zielort fest. Das an die Steuereinheit weitergeleitete Freigabesignal kann dann den aktuellen Zielort umfassen. Beispielsweise ist in dem Speicher der Berechtigungseinrichtung gespeichert, dass an zumindest einem Werktag um eine bestimmte Uhrzeit, wie beispielsweise um 8:00 Uhr vormittags, die Steuereinheit das Kraftfahrzeug nach Erfassen des zumindest einen bestimmten Kindes im Innenraum des Kraftfahrzeugs zu einer bestimmten Schule steuern soll. Die Berechtigungseinrichtung kann dann in einem vorbestimmten Zeitraum vor Eintreten der bestimmten Uhrzeit, wie beispielsweise um 7:55 Uhr, das Abfragesignal bereits aussenden. Dabei kann das zumindest eine Kind bereits im Kraftfahrzeug sitzen. Die bestimmte Uhrzeit, bei welchem das Kraftfahrzeug losfahren soll, kann eine Toleranzzeit umfassen, sodass eine Verspätung des zumindest einen erwarteten Kraftfahrzeuginsassen mit berücksichtigt wird. Der in dem Speicher der Berechtigungseinrichtung gespeicherte Kalenderzeitpunkt mit dem zugeordneten Zielort kann mit einem weiteren Speicher eines mobilen Endgeräts wie beispielsweise mit dem Speicher des fahrzeugexternen Berechtigungsgeräts koordiniert sein. So kann beispielsweise das Berechtigungsgerät des Erziehungsberechtigten einen Kalender umfassen, in welchem zumindest ein bestimmter Kalenderzeitpunkt mit einem bestimmten zugeordneten Zielort gespeichert ist. Durch die Kommunikationsverbindung zwischen dem Berechtigungsgerät und der Berechtigungseinrichtung kann eine Veränderung im Kalender durch ein Informationssignal an den Speicher der Berechtigungseinrichtung gesendet werden und dieser die Veränderung speichern. So kann der Erziehungsberechtigte im Kalender die einzelnen Termine seines Kindes eintragen. Auch kann dem Kalender bereits das Freigabesignal für zumindest einen bestimmten Kalenderzeitpunkt mit dem jeweiligen zugeordneten Zielort gespeichert sein und bei Empfang des Abfragesignals automatisch gesendet werden. Der Benutzer des Berechtigungsgeräts muss somit für ihn bereits bekannte und erlaubte Fahrstrecken nicht jedes Mal erneut freigeben. Dadurch gestaltet sich das Verfahren besonders benutzerfreundlich.

In einer weiteren vorteilhaften Ausgestaltung des erfindungsgemäßen Verfahrens wird bei Nicht-Erfüllen des mindestens einen Berechtigungskriteriums wenigstens ein in dem zumindest teilautonomen Fahrmodus auswählbarer Betriebsparameter und/oder ein Funktionsumfang des zumindest teilautonomen Fahrmodus begrenzt. Ermittelt also die Berechtigungseinrichtung, dass keiner des wenigstens einen erfassten Kraftfahrzeuginsassen das zumindest eine Berechtigungskriterium erfüllt, kann die Berechtigungseinrichtung ein Einschränkungssignal an die Steuereinheit des Kraftfahrzeugs senden. Bei Empfang des Einschränkungssignals schränkt die Steuereinheit zumindest einen auswählbarer Betriebsparameter, wie beispielsweise eine Geschwindigkeit des Kraftfahrzeugs, und/oder einen Funktionsumfang, wie beispielsweise einen Betrieb des zumindest teilautonomen Fahrmodus, ein. Beispielsweise umfasst das Einschränkungssignal, dass ein Starten des Kraftfahrzeugs untersagt wird. Das Einschränkungssignal kann aber auch in dem Freigabesignal integriert sein. Beispielsweise kann in diesem Fall das Einschränkungssignal umfassen, dass die Steuereinheit das Kraftfahrzeug zu einem bestimmten Zielort steuert, jedoch zum Erreichen dieses Zielortes nur diejenigen Wegstrecken auswählen darf, welche eine Strecke über eine Autobahn ausschließen. Das Einschränkungssignal kann von einer Benutzereingabe oder von einer gespeicherten Benutzereinstellung konfiguriert werden. Hierdurch ergibt sich der Vorteil, dass die Sicherheit einer zumindest teilautonomen Fahrt eines Kraftfahrzeugs mit lediglich einem nichtfahrzeugführungsberechtigten Kraftfahrzeuginsassen erhöht wird, da von einer fahrzeugführungsberechtigten Person extern gesteuert und kontrolliert werden kann, wie sich diese teilautonomen Fahrt gestaltet. Beispielsweise verringert das Begrenzen der Geschwindigkeit des Kraftfahrzeugs während der zumindest teilautonomen gesteuerten Fahrt das Risiko eines folgenschweren Unfalls.

In einer bevorzugten Ausführungsform hierzu betrifft der wenigstens eine Betriebsparameter und/oder der Funktionsumfang eine Geschwindigkeit und/oder eine Maximalgeschwindigkeit des Kraftfahrzeugs und/oder den Zielort und/oder die Wegstrecke und/oder eine Straßenkategorie der Wegstrecke. Eine Straßenkategorie kann beispielsweise eine Stadtstraße, eine Landstraße, eine Bundesstraße, eine Fernverkehrsstraße oder eine Autobahn sein. Beispielsweise kann dadurch verhindert werden, dass ein Kind den freigegebenen Zielort nachträglich selbst ändert.

In einer weiteren bevorzugten Ausführungsform hierzu wird eine Begrenzung des wenigstens einen Betriebsparameters und/oder des Funktionsumfangs in Abhängigkeit von wenigstens einem vorbestimmten Zeitpunkt und/oder in Abhängigkeit von wenigstens einem vorbestimmten Zeitintervall bestimmt. Bei dem wenigstens einen vorbestimmten Zeitpunkt kann es sich beispielsweise um den Kalenderzeitpunkt mit dem zugeordneten Zielort handeln. Das wenigstens eine vorbestimmte Zeitintervall kann den Kalenderzeitpunkt umfassen. Bei dem vorbestimmten Zeitintervall kann es sich aber auch um eine relative Zeitangabe, wie beispielsweise vormittags, nachmittags, abends oder nachts, handeln. Durch die zeitabhängige Begrenzung ergibt sich der Vorteil, dass automatisch der Betriebsparameter und/oder der Funktionsumfang der Steuereinheit begrenzt wird, wenn zu erwarten ist, dass sich kein Fahrzeugführungsberechtigter im Kraftfahrzeug aufhält. Hierzu muss keine ständige Bereitschaft des Benutzers des fahrzeugexternen Berechtigungsgeräts vorliegen.

In einer weiteren vorteilhaften Ausgestaltung des erfindungsgemäßen Verfahrens umfasst das mindestens eine Berechtigungskriterium, dass der zumindest eine Kraftfahrzeuginsasse durch die Berechtigungseinrichtung als fahrtüchtig erkannt wird. Das mindestens eine Berechtigungskriterium kann weiterhin umfassen, dass der zumindest eine Kraftfahrzeuginsasse als volljährig erkannt wurde und/oder als fahrzeugführungsberechtigt erkannt wurde. Das mindestens eine Berechtigungskriterium prüft darauf, ob zumindest einer des wenigstens einen Kraftfahrzeuginsassen physisch als auch geistig dazu in der Lage ist, schnell und sachgerecht in einer Gefahrensituation im Straßenverkehr zu handeln. Durch diese Prüfung wird eine Sicherheit des wenigstens einen Kraftfahrzeuginsassen als auch eine Sicherheit der Personen, welche sich in einer Umgebung des Kraftfahrzeugs befinden, erhöht.

In einer vorteilhaften Ausführungsform der Erfindung erfasst die Erfassungseinrichtung den wenigstens einen Kraftfahrzeuginsassen durch eine Erfassung einer Stimme und/oder eines Bilds und/oder eines biometrischen Merkmals und/oder durch eine Gewichtsveränderung auf einem Fahrersitz des Kraftfahrzeugs und/oder durch Ermitteln eines fahrzeugexternen Bediengeräts im Kraftfahrzeug. Die Erfassungseinrichtung kann eine Kamera und/oder ein Mikrofon und/oder einen Sensor zur Erfassung eines biometrischen Merkmals umfassen. Die Erfassungseinrichtung kann weiterhin weitere Sensoren im und/oder am Kraftfahrzeug umfassen, welche beispielsweise erfassen, dass ein Gewicht auf dem Fahrersitz verlagert wird oder dass ein mobiles Endgerät sich im Innenraum des Kraftfahrzeugs befindet. Beispielsweise kann die Erfassungseinrichtung bei einer Inbetriebnahme des Kraftfahrzeugs eine Stimme im Kraftfahrzeug erfassen. Bevor die Stimmenerfassung beginnt, kann eine Klangabfolge im Kraftfahrzeug ausgegeben werden, wie beispielsweise die Frage "wo möchtest du hin?". Anhand der von der Erfassungseinrichtung erfassten Stimme kann die Berechtigungseinrichtung prüfen, ob diese Stimme einer gespeicherten Stimme und/oder einem gespeicherten Personenprofil zugeordnet werden kann. Die Erfassungseinrichtung kann auch beispielsweise ein Mobiltelefon und/oder das Berechtigungsgerät im Kraftfahrzeuginnenraum erfassen und die Berechtigungseinrichtung kann prüfen, ob das Mobiltelefon und/oder das Berechtigungsgerät einem Personenprofil zugeordnet werden kann. Alternativ kann die Erfassungseinrichtung einen Scanner umfassen, der einen Ausweis, wie beispielsweise einem Schülerausweis/oder einem Fahrzeugführerschein und/oder einem Personalausweis, einscannt, wobei der Ausweis ebenfalls von der Berechtigungseinrichtung geprüft und zugeordnet werden kann. Auch kann die Erfassungseinrichtung mittels eines Fingerabdrucksensors, welcher beispielsweise an einem Türgriff des Kraftfahrzeugs angeordnet ist, und/oder mittels eines Augenerfassungssensors den zumindest einen Kraftfahrzeuginsassen erfassen. Dadurch ergibt sich eine Vielzahl von Möglichkeiten, den zumindest einen Kraftfahrzeuginsassen zu erfassen und zu bestimmen, ob es sich bei diesem um eine fahrzeugführungsberechtigte Person handelt. Durch eine Kombination der verschiedenen Erfassungsmöglichkeiten kann die Genauigkeit der Zuordnung zu einem Personenprofil und/oder des Bestimmens, ob der wenigstens eine Kraftfahrzeuginsasse das mindestens eine Berechtigungskriterium erfüllt, erhöht werden.

Im Folgenden sind Ausführungsbeispiele der Erfindung beschrieben. Hierzu zeigt:
- Fig. 1: eine schematische Darstellung eines Kraftfahrzeugs mit einer Steuereinheit zum Betreiben in einem zumindest teilautonomen Fahrmodus; und
- Fig. 2: ein Diagramm, welches die Verfahrensschritte für ein Verfahren zum Betreiben des Kraftfahrzeugs in dem zumindest teilautonomen Fahrmodus erläutert.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

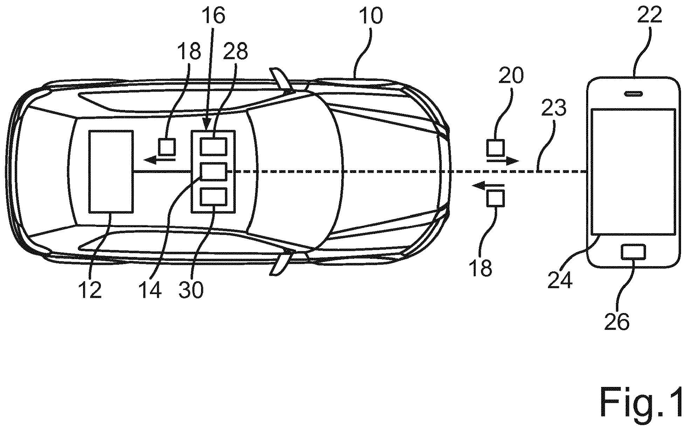

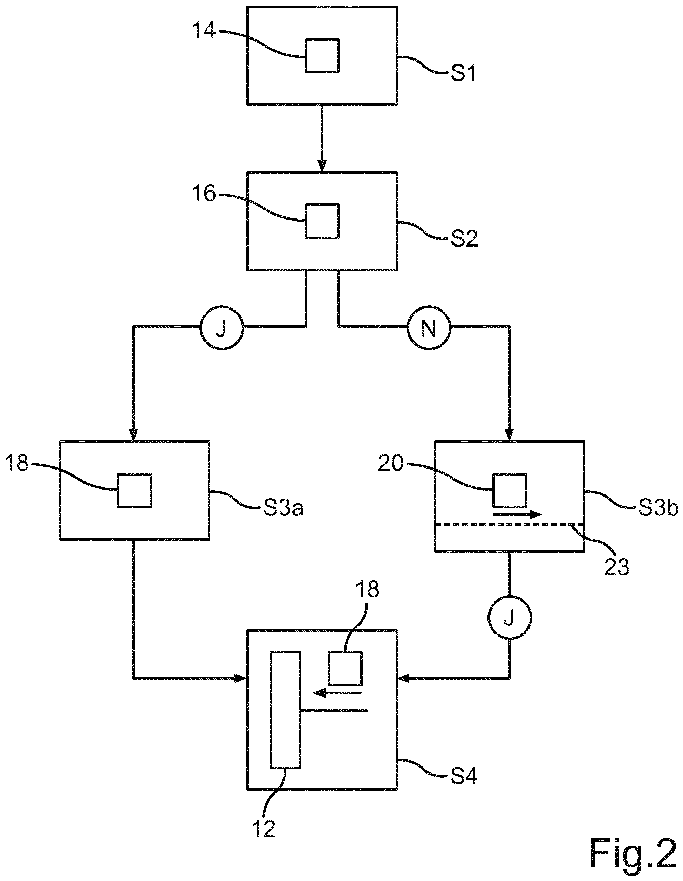

In Fig. 1 ist eine schematische Darstellung eines Kraftfahrzeugs 10 mit einer Steuereinheit 12 zum Betreiben des Kraftfahrzeugs 10 in einem zumindest teilautonomen Fahrmodus dargestellt. In Fig. 2 ist ein Diagramm dargestellt, welches die zusammenhängenden Verfahrensschritte für ein Verfahren zum Betreiben des Kraftfahrzeugs 10 in dem zumindest teilautonomen Fahrmodus beschreibt. Im Folgenden sind die beiden Figuren zusammen erläutert.

Der zumindest teilautonome Fahrmodus umfasst, dass die Steuereinheit 12 das Kraftfahrzeug 10 zum Erreichen eines vorbestimmten Zielorts entlang einer Wegstrecke steuert. Beispielsweise steuert die Steuereinheit 12 hierzu ein Lenken, ein Bremsen und ein Beschleunigen des Kraftfahrzeugs 10. Das Kraftfahrzeug 10 umfasst eine Erfassungseinrichtung 14, welche in einem ersten Verfahrensschritt S1 zumindest einen Kraftfahrzeuginsassen erfasst. Beispielsweise erfasst die Erfassungseinrichtung 14 eine Stimme und/oder ein Mobiltelefon und/oder einen Ausweis und/oder ein Gewicht und/oder einen Fingerabdruck und/oder ein Auge des zumindest einen Kraftfahrzeuginsassen. Die Erfassungseinrichtung 14 kann auch nur denjenigen Kraftfahrzeuginsassen erfassen, welcher sich auf dem ausgewiesenen Fahrersitz befindet, wie beispielsweise hinter einem Lenkrad des Kraftfahrzeugs 10. Die Erfassungseinrichtung 14 kann als eine Kamera, ein Mikrofon, ein Sensor oder eine Kombination dieser ausgebildet sein. Die Erfassungseinrichtung 14 kann die Erfassung des zumindest einen Kraftfahrzeuginsassen dann vornehmen, wenn die Steuereinheit 12 ein Aktivieren des zumindest teilautonomen Fahrmodus ermittelt. Alternativ wird die Erfassung dann vorgenommen, wenn ein Zusteigen des zumindest einen Kraftfahrzeuginsassen in das Kraftfahrzeug 10 ermittelt wird.

Die Erfassungseinrichtung 14 ist in Fig. 1 in eine Berechtigungseinrichtung 16 integriert. Alternativ kann die Erfassungseinrichtung 14 mit der Berechtigungseinrichtung 16 gekoppelt sein, wie beispielsweise über eine Funkverbindung oder eine elektrische Leitung. Die Berechtigungseinrichtung 16 empfängt von der Erfassungseinrichtung 14 eine Information zu dem wenigstens einen erfassten Kraftfahrzeuginsassen und prüft in einem zweiten Verfahrensschritt S2, ob zumindest einer des erfassten Kraftfahrzeuginsassen mindestens ein Berechtigungskriterium erfüllt. Ermittelt die Berechtigungseinrichtung 16, dass der zumindest eine Kraftfahrzeuginsasse das mindestens eine Berechtigungskriterium erfüllt (J), sendet diese in einem dritten Verfahrensschritt S3a ein Freigabesignal 18 an die Steuereinheit 12. Besitzt beispielsweise zumindest einer der erfassten Kraftfahrzeuginsassen einen Führerschein, erzeugt die Berechtigungseinrichtung 16 das Freigabesignal 18 und der Betrieb des zumindest teilautonomen Fahrmodus wird bei Empfang des Freigabesignals 18 durch die Steuereinheit 12 in einem vierten Verfahrensschritt S4 aktiviert und/oder fortgeführt. Hierzu kann die Berechtigungseinrichtung 16 mit der Steuereinheit 12 gekoppelt sein oder in der Steuereinheit 12 integriert sein.

Ermittelt die Berechtigungseinrichtung 16 jedoch, dass keiner der erfassten Kraftfahrzeuginsassen das zumindest eine Berechtigungskriterium erfüllt (N), sendet die Berechtigungseinrichtung 16 zunächst in einem alternativen dritten Verfahrensschritt S3b ein Abfragesignal 20 an ein fahrzeugexternes Berechtigungsgerät 22. Hierzu baut die Berechtigungseinrichtung 16 eine Kommunikationsverbindung 23 zu dem fahrzeugexternen Berechtigungsgerät 22 auf. Die Kommunikationsverbindung 23 kann als Mobilfunk-, Bluetooth- oder WLAN-Verbindung ausgebildet sein. Falls die Berechtigungseinrichtung 16 in Antwort auf das ausgesendete Abfragesignal 20 ein Freigabesignal 18 über die Kommunikationsverbindung 23 empfängt (J), leitet die Berechtigungseinrichtung 16 das Freigabesignal 18 an die Steuereinheit 12 weiter und der Verfahrensschritt S4 wird daraufhin ausgeführt. Bleibt ein Empfang des Freigabesignals 18 jedoch aus, wird der zumindest teilautonome Fahrmodus unterbunden und/oder deaktiviert.

Bei dem fahrzeugexternen Berechtigungsgerät 22 handelt es sich beispielsweise um ein Mobiltelefon eines Erziehungsberechtigten und/oder eines Fahrzeughalters des Kraftfahrzeugs 10. Das Berechtigungsgerät 22 umfasst eine Bedienfläche 24, welche das Abfragesignal 20 über eine audiovisuelle Ausgabe ausgeben kann und über welche der Erziehungsberechtigte eingeben kann, ob er das Aktivieren des zumindest teilautonomen Fahrmodus erlaubt und/oder für welchen Zielort der zumindest teilautonome Fahrmodus erlaubt ist. Das Berechtigungsgerät 22 umfasst weiterhin einen Speicher 26, in welchem zumindest eine Benutzereinstellung gespeichert werden kann, wobei die Benutzereinstellung eine Angabe darüber enthält, ob bei Empfangen eines bestimmten Abfragesignals 20 das Freigabesignal 18 erzeugt werden soll. Hierzu kann geprüft werden, ob das Abfragesignal 20 vorbestimmte Bedingungen erfüllt, wie beispielsweise ein Alter des erfassten Kindes im Kraftfahrzeug 10 und/oder ein bestimmter Zielort und/oder eine bestimmte Wegstrecke und/oder ein bestimmter Kalenderzeitpunkt. Dabei kann das Abfragesignal 20 eine Information hierzu umfassen oder das daraufhin erzeugte Freigabesignal 18 diese Angaben bereitstellen. Die fahrzeuginterne Berechtigungseinrichtung 16 umfasst ebenfalls eine Bedienfläche 28 und einen Speicher 30. Über die Bedienfläche 28 oder den Speicher 30 kann ebenfalls durch einen Kraftfahrzeuginsassen eine Angabe zu dem Zielort und/oder einer bestimmten Wegstrecke und/oder einem bestimmten Kalenderzeitpunkt ermittelt werden.

Wird durch die Berechtigungseinrichtung 16 ermittelt, dass keiner des zumindest einen Kraftfahrzeuginsassen im Kraftfahrzeug 10 das mindestens eine Berechtigungskriterium erfüllt, kann die Berechtigungseinrichtung 16 den zumindest teilautonomen Fahrmodus einschränken. Die Einschränkung umfasst, dass auch bei Vorliegen des Freigabesignals 18 nur bestimmte Wegstrecken genutzt werden dürfen, wie beispielsweise eine Fahrt nur zum Kindergarten oder zur Schule erlaubt werden. Weiterhin umfasst die Einschränkung, dass eine Fahrzeuggeschwindigkeit des Kraftfahrzeugs 10 derart reguliert wird, sodass das Kraftfahrzeug 10 eine vorbestimmte Maximalgeschwindigkeit nicht überschreitet. Es kann auch durch eine Anzeigevorrichtung an dem Kraftfahrzeug signalisiert werden, dass im Kraftfahrzeug sich keine fahrzeugführungsberechtigte Person befindet. Beispielsweise wird angezeigt, dass es sich um eine sogenannte Schulfahrt handelt. Weiterhin kann die Einschränkung eine zeitliche Einschränkung umfassen, sodass das Kind im Kraftfahrzeug werktags nur aus einer eingeschränkten Liste auswählbarer Zielorte auswählen kann, jedoch am Wochenende mehrere Zielorte zur Verfügung stehen hat. Beispielsweise kann das Kind am Wochenende wählen, dass es zu einem Fußballverein und/oder ins Kino gefahren werden soll. Auch kann der Speicher 30 der Berechtigungseinrichtung 16 oder der Speicher 26 des fahrzeugexternen Berechtigungsgeräts 22 einen Terminkalender eines Kindes umfassen. Die Berechtigungseinrichtung 16 kann dadurch im Vorfeld den Erziehungsberechtigten um eine Freigabe einer bestimmten gespeicherten Fahrt zu einem gespeicherten Zielort abfragen. Der Erziehungsberechtigte kann im Vorfeld entscheiden, welcher Zielort freigegeben wird.

Insgesamt zeigen die Beispiele, wie durch die Erfindung die Nutzung von einem zumindest teilautonom gesteuerten Kraftfahrzeug durch Nicht-Fahrzeugführungsberechtigte wie beispielsweise einem Kind eingeschränkt und/oder verhindert wird.

## Patentansprüche

1. Verfahren zum Betreiben eines Kraftfahrzeugs (10) in einem aktivierten zumindest teilautonomen Fahrmodus, wobei das Kraftfahrzeug (10) eine Steuereinheit (12) umfasst, welche das Kraftfahrzeug (10) bei aktiviertem zumindest teilautonomen Fahrmodus zum Erreichen eines Zielortes entlang einer Wegstrecke steuert,
wobei
- eine im Kraftfahrzeug (10) angeordnete Erfassungseinrichtung (14) wenigstens einen Kraftfahrzeuginsassen in dem Kraftfahrzeug (10) erfasst;
- eine mit der Erfassungseinrichtung (14) gekoppelte Berechtigungseinrichtung (16) nach Erfassen des wenigstens einen Kraftfahrzeuginsassen prüft, ob zumindest einer des wenigstens einen erfassten Kraftfahrzeuginsassen mindestens ein Berechtigungskriterium erfüllt; wobei
- bei Erfüllen des mindestens einen Berechtigungskriteriums die Berechtigungseinrichtung (16) ein Freigabesignal (18) selbst erzeugt und an die Steuereinheit (12) sendet, wobei die Steuereinheit (12) bei Empfang des Freigabesignals (18) den zumindest teilautonomen Fahrmodus aktiviert; und
- bei Nicht-Erfüllen des mindestens einen Berechtigungskriteriums die Berechtigungseinrichtung (16) ein Abfragesignal (20) an ein fahrzeugexternes Berechtigungsgerät (22) aussendet, und von dem externen Berechtigungsgerät (22) ein externes Freigabesignal (18) empfängt und in Abhängigkeit von einem Empfangen des externen Freigabesignals (18) in Antwort auf das Abfragesignal (20) die Berechtigungseinrichtung (16) das empfangene externe Freigabesignal (18) an die Steuereinheit (12) weiterleitet,
**dadurch gekennzeichnet,**
**dass** das Freigabesignal (18) eine Information zu dem Zielort umfasst, wobei die Steuereinheit (12) bei Empfangen des Freigabesignals (18) den in dem Freigabesignal (18) umfassten Zielort auswählt und den zumindest teilautonomen Fahrmodus aktiviert.

2. Verfahren nach Anspruch 1,
**dadurch gekennzeichnet, dass**
das fahrzeugexterne Berechtigungsgerät (22) auf Empfang des Abfragesignals (20) hin das Freigabesignal (18) in Abhängigkeit von einer vorbestimmten Benutzereingabe über eine Bedienfläche (24) des fahrzeugexternen Berechtigungsgeräts (22) und/oder in Abhängigkeit von einer in einem Speicher (26) des fahrzeugexternen Berechtigungsgeräts (22) gespeicherten Benutzereinstellung erzeugt.

3. Verfahren nach einem der vorhergehenden Ansprüche,
**dadurch gekennzeichnet, dass**
der in dem Freigabesignal (18) umfasste Zielort durch ein Erkennen einer weiteren vorbestimmten Benutzereingabe über die Bedienfläche (24) des fahrzeugexternen Berechtigungsgeräts (22) und/oder durch eine in dem Speicher (26) des fahrzeugexternen Berechtigungsgeräts (22) gespeicherten Benutzereinstellung und/oder durch ein Erkennen einer Benutzereingabe über eine Bedienfläche (28) der Berechtigungseinrichtung (16) und/oder durch eine in einem Speicher (30) der Berechtigungseinrichtung (16) gespeicherten Benutzereinstellung vorgegeben wird.

4. Verfahren nach einem der vorhergehenden Ansprüche,
**dadurch gekennzeichnet, dass**
- der Zielort mit wenigstens einem dem Zielort zugeordneten Kalenderzeitpunkt in einen Speicher (30) der Berechtigungseinrichtung (16) gespeichert wird; und
- bei Nicht-Erfüllen des mindestens einen Berechtigungskriteriums die Berechtigungseinrichtung (16) in einem vorbestimmten Zeitabstand vor oder zu dem wenigstens einen gespeicherten Kalenderzeitpunkt den gespeicherten Zielort als einen aktuellen Zielort festlegt und das Abfragesignal (20) an das fahrzeugexterne Berechtigungsgerät (22) aussendet.

5. Verfahren nach einem der vorhergehenden Ansprüche,
**dadurch gekennzeichnet, dass**
wenigstens ein in dem zumindest teilautonomen Fahrmodus auswählbarer Betriebsparameter und/oder ein Funktionsumfang des zumindest teilautonomen Fahrmodus bei Nicht-Erfüllen des mindestens einen Berechtigungskriteriums begrenzt wird.

6. Verfahren nach Anspruch 5,
**dadurch gekennzeichnet, dass**
der wenigstens eine Betriebsparameter und/oder der Funktionsumfang eine Geschwindigkeit des Kraftfahrzeugs (10) und/oder den Zielort und/oder die Wegstrecke und/oder eine Straßenkategorie der Wegstrecke betrifft.

7. Verfahren nach Anspruch 5 oder 6,
**dadurch gekennzeichnet, dass**
eine Begrenzung des wenigstens einen Betriebsparameters und/oder des Funktionsumfangs in Abhängigkeit von wenigstens einem vorbestimmten Zeitpunkt und/oder in Abhängigkeit von wenigstens einem vorbestimmten Zeitintervall bestimmt wird.

8. Verfahren nach einem der vorhergehenden Ansprüche,
**dadurch gekennzeichnet, dass**
das mindestens eine Berechtigungskriterium umfasst, dass der zumindest eine Kraftfahrzeuginsasse durch die Berechtigungseinrichtung (16) als fahrtüchtig erkannt wird, insbesondere als volljährig und/oder als fahrzeugführungsberechtigt.

9. Verfahren nach einem der vorhergehenden Ansprüche,
**dadurch gekennzeichnet, dass**
die Erfassungseinrichtung (14) den wenigstens einen Kraftfahrzeuginsassen durch eine Erfassung einer Stimme und/oder eines Bilds und/oder eines biometrischen Merkmals und/oder eines Gewichts auf einem Fahrersitz des Kraftfahrzeugs (10) und/oder eines fahrzeugexternen Bediengeräts im Kraftfahrzeug (10) erfasst.

## Claims

1. Method for operating a motor vehicle (10) in an activated, at least partially autonomous driving mode, wherein the motor vehicle (10) comprises a control unit (12) which controls the motor vehicle (10) when the at least partially autonomous driving mode is activated to reach a destination along a route,
wherein
- a detection device (14) arranged in the motor vehicle (10) detects at least one motor vehicle occupant in the motor vehicle (10);
- an authorisation apparatus (16) coupled to the detection device (14) checks, after the at least one motor vehicle occupant has been detected, whether at least one of the at least one detected motor vehicle occupants satisfies at least one authorisation criterion; wherein
- when the at least one authorisation criterion is satisfied, the authorisation apparatus (16) itself generates an enable signal (18) and sends it to the control unit (12), wherein the control unit (12), upon reception of the enable signal (18), activates the at least partially autonomous driving mode; and
- when the at least one authorisation criterion is not satisfied, the authorisation apparatus (16) transmits an interrogation signal (20) to a vehicle-external authorisation device (22) and receives an external enable signal (18) from the external authorisation device (22) and, as a function of a reception of the external enable signal (18), the authorisation apparatus (16) forwards the received enable signal (18) to the control unit (12) in response to the interrogation signal (20),
**characterised in that**
the enable signal (18) comprises an item of information about the destination, wherein the control unit (12), upon reception of the enable signal (18), selects the destination comprised in the enable signal (18) and activates the at least partially autonomous driving mode.

2. Method according to claim 1,
**characterised in that**
upon reception of the interrogation signal (20), the vehicle-external authorisation device (22) generates the enable signal (18) as a function of a predetermined user input via a control surface (24) of the vehicle-external authorisation device (22) and/or as a function of a user setting stored in a memory (26) of the vehicle-external authorisation device (22).

3. Method according to any of the preceding claims,
**characterised in that**
the destination comprised in the enable signal (18) is predefined by means of a recognition of a further predetermined user input via the control surface (24) of the vehicle-external authorisation device (22) and/or by a user setting stored in the memory (26) of the vehicle-external authorisation device (22) and/or by means of a recognition of a user input via a control surface (28) of the authorisation apparatus (16) and/or by a user setting stored in a memory (30) of the authorisation apparatus (16).

4. Method according to any of the preceding claims,
**characterised in that**
- the destination is stored with at least one calendar time associated with the destination in a memory (30) of the authorisation apparatus (16); and
- when the at least one authorisation criterion is not satisfied, the authorisation apparatus (16) specifies the stored destination as a current destination within a predetermined time interval prior to or at the at least one stored calendar time and transmits the interrogation signal (20) to the vehicle-external authorisation device (22).

5. Method according to any of the preceding claims,
**characterised in that**
at least one operating parameter that can be selected in the at least partially autonomous driving mode and/or a functional scope of the at least partially autonomous driving mode is restricted when the at least one authorisation criterion is not satisfied.

6. Method according to claim 5,
**characterised in that**
the at least one operating parameter and/or the functional scope relates to a speed of the motor vehicle (10) and/or the destination and/or the route and/or a road category of the route.

7. Method according to claim 5 or 6,
**characterised in that**
a restriction of the at least one operating parameter and/or of the functional scope is determined as a function of at least one predetermined time and/or as a function of at least one predetermined time interval.

8. Method according to any of the preceding claims,
**characterised in that**
the at least one authorisation criterion comprises that the at least one motor vehicle occupant is recognised by the authorisation apparatus (16) as being able to drive, in particular as being of legal age and/or as being authorised to drive a vehicle.

9. Method according to any of the preceding claims,
**characterised in that**
the detection device (14) detects the at least one motor vehicle occupant by detecting a voice and/or an image and/or a biometric feature and/or a weight on a driver's seat of the motor vehicle (10) and/or a vehicle-external control device in the motor vehicle (10).

## Revendications

1. Procédé de fonctionnement d'un véhicule automobile (10) dans un mode de roulement activé au moins partiellement autonome, dans lequel le véhicule automobile (10) comporte une unité de commande (12) qui commande le véhicule automobile (10) en cas de mode de roulement activé au moins partiellement autonome pour l'atteinte d'une destination le long d'un parcours, dans lequel
- un dispositif de détection (14) agencé dans le véhicule automobile (10) détecte au moins un occupant de véhicule automobile dans le véhicule automobile (10) ;
- un dispositif d'autorisation (16) couplé au dispositif de détection (14) après la détection d'au moins un occupant de véhicule automobile vérifie si au moins un d'au moins un occupant de véhicule automobile détecté remplit au moins un critère d'autorisation ; dans lequel
- lors du remplissage d'au moins un critère d'autorisation le dispositif d'autorisation (16) génère un signal de validation (18) lui-même et l'envoie à l'unité de commande (12), dans lequel l'unité de commande (12) active lors de la réception du signal de validation (18) le mode de roulement au moins partiellement autonome ; et
- lors du non-remplissage d'au moins un critère d'autorisation le dispositif d'autorisation (16) envoie un signal d'interrogation (20) à un appareil d'autorisation (22) externe au véhicule, et reçoit de l'appareil d'autorisation (22) externe un signal de validation (18) externe et, en fonction d'une réception du signal de validation (18) externe en réponse au signal d'interrogation (20), le dispositif d'autorisation (16) transmet le signal de validation (18) externe reçu à l'unité de commande (12),
**caractérisé en ce**
**que** le signal de validation (18) comporte une information sur la destination, dans lequel l'unité de commande (12) sélectionne lors de la réception du signal de validation (18) la destination comprise dans le signal de validation (18) et active le mode de roulement au moins partiellement autonome.

2. Procédé selon la revendication 1,
**caractérisé en ce que**
l'appareil d'autorisation (22) externe au véhicule génère sur réception du signal d'interrogation (20) le signal de validation (18) en fonction d'une entrée utilisateur prédéterminée sur une surface d'utilisation (24) de l'appareil d'autorisation (22) externe au véhicule et/ou en fonction d'un réglage utilisateur enregistré dans une mémoire (26) de l'appareil d'autorisation (22) externe au véhicule.

3. Procédé selon l'une des revendications précédentes,
**caractérisé en ce que**
la destination comprise dans le signal de validation (18) est prédéfinie par une reconnaissance d'une autre entrée utilisateur prédéterminée sur la surface de commande (24) de l'appareil d'autorisation (22) externe au véhicule et/ou par un réglage utilisateur enregistré dans la mémoire (26) de l'appareil d'autorisation (22) externe au véhicule et/ou par une reconnaissance d'une entrée utilisateur sur une surface de commande (28) du dispositif d'autorisation (16) et/ou par un réglage utilisateur enregistré dans une mémoire (30) du dispositif d'autorisation (16).

4. Procédé selon l'une des revendications précédentes,
**caractérisé en ce que**
- la destination est enregistrée avec au moins une date de calendrier associée à la destination dans une mémoire (30) du dispositif d'autorisation (16) ; et
- en cas de non-remplissage d'au moins un critère d'autorisation le dispositif d'autorisation (16) fixe dans un intervalle temporel prédéterminé avant ou à l'au moins une date de calendrier enregistrée la destination enregistrée comme destination actuelle et envoie le signal d'interrogation (20) à l'appareil d'autorisation (22) externe au véhicule.

5. Procédé selon l'une des revendications précédentes,
**caractérisé en ce que**
au moins un paramètre de fonctionnement sélectionnable dans le mode de roulement au moins partiellement autonome et/ou une étendue fonctionnelle du mode de roulement au moins partiellement autonome est limitée en cas de non-remplissage d'au moins un critère d'autorisation.

6. Procédé selon la revendication 5,
**caractérisé en ce que**
l'au moins un paramètre de fonctionnement et/ou l'étendue fonctionnelle concerne une vitesse du véhicule automobile (10) et/ou la destination et/ou le parcours et/ou une catégorie routière du parcours.

7. Procédé selon la revendication 5 ou 6,
**caractérisé en ce que**
une limitation d'au moins un paramètre de fonctionnement et/ou de l'étendue fonctionnelle est déterminée en fonction d'au moins une date prédéterminée et/ou en fonction d'au moins un intervalle temporel prédéterminé.

8. Procédé selon l'une des revendications précédentes,
**caractérisé en ce que**
qu'au moins un critère d'autorisation comprend que l'au moins un occupant de véhicule automobile soit reconnu par le dispositif d'autorisation (16) comme en état de conduire, en particulier comme majeur et/ou comme autorisé à la conduite de véhicule.

9. Procédé selon l'une des revendications précédentes,
**caractérisé en ce que**
le dispositif de détection (14) détecte l'au moins un occupant de véhicule automobile par une détection d'une voix et/ou d'une image et/ou d'une caractéristique biométrique et/ou d'un poids sur un siège de conducteur du véhicule automobile (10) et/ou d'un appareil de commande externe au véhicule dans le véhicule automobile (10).
